# EUROPEAN PATENT APPLICATION

(11) **EP 4 667 258 A1**
(43) Date of publication of application: **24.12.2025**
(21) Application number: 25180460.5
(22) Date of filing: 03.06.2025
(51) Int. Cl.: B60K 6/38, B60K 6/387, B60K 6/40, B60K 6/445

(54) **WORK VEHICLE**

(30) Priority: 21.06.2024 JP 2024100686
(71) Applicant: Kubota Corporation, Osaka-shi, Osaka 556-8601 (JP)
(72) Inventor: HIRASE, Yuji, SAKAI-SHI, OSAKA, 5900908 (JP); II, Tsunehiro, SAKAI-SHI, OSAKA, 5900908 (JP)
(74) Representative: Cabinet Beau de Loménie

(57) **Abstract**

In a plan view, a motor transmission shaft (21a) of a motor (21) and a first input shaft (41) of a first planetary gear device (23) are provided on a first side of an engine transmission shaft (18) in a left-right direction, and a generator transmission shaft (22a) of a generator (22) and a second input shaft (42) of a second planetary gear device (24) are provided on a second side of the engine transmission shaft (18) in the left-right direction. The first input shaft (41) is closer to the engine transmission shaft (18) than the motor transmission shaft (21a) is. The second input shaft (42) is closer to the engine transmission shaft (18) than the generator transmission shaft (22a) is.

## Description

### BACKGROUND OF THE INVENTION

### 1. Field of the Invention

The present invention relates to the configuration of a transmission system for travel in a work vehicle.

### 2. Description of the Related Art

Tractors are an example of a work vehicle, and there are hybrid tractors that, as disclosed in JP 2023-177846A, include a motor and a generator in addition to an engine, and motive power from the engine and motive power from the motor are transmitted to a planetary gear device and combined, and the combined motive power is transmitted from the planetary gear device to a travel device.

It has been proposed to provide two planetary gear devices in a work vehicle to increase the range of speed change. In this case, a configuration has been conceived in which the motor and the generator are arranged next to each other in the left-right direction, and a first planetary gear device and a second planetary gear device are arranged next to each other in the left-right direction.

### SUMMARY OF THE INVENTION

Unlike in ordinary passenger vehicles, in work vehicles, low-speed, high-torque power is transmitted to the travel device. Accordingly, in a hybrid work vehicle that includes a motor and a generator, when increasing the output of the motor and the generator, it is necessary to increase the size of the cores of the motor and the generator.

When the cores of the motor and generator are increased in size as described above, the case that houses the first planetary gear device and the second planetary gear device also increases in size, which leads to an increase in the weight of the work vehicle. For this reason, there is a demand for a configuration that can suppress an increase in the weight of the work vehicle even if the cores of the motor and generator are increased in size.

An object of the present invention is to suppress an increase in the weight of a hybrid work vehicle that includes a motor, generator, a first planetary gear device, and a second planetary gear device when the output of the motor and the generator are increased.

A work vehicle according to an aspect of the present invention includes: a travel device; an engine; a battery; an engine transmission shaft extending in a front-rear direction and configured to receive motive power from the engine; a travel transmission shaft extending in the front-rear direction; a motor including a motor transmission shaft extending in the front-rear direction, the motor being configured to transmit motive power from the motor transmission shaft to the travel transmission shaft; a generator including a generator transmission shaft extending in the front-rear direction, the generator transmission shaft being configured to receive motive power from the engine transmission shaft; a first planetary gear device including a first input shaft extending in the front-rear direction, the first planetary gear device being configured to receive motive power from the engine transmission shaft and motive power from the travel transmission shaft, combine the received motive power, and transmit the combined motive power to the travel device; and a second planetary gear device including a second input shaft extending in the front-rear direction, the second planetary gear device being configured to receive motive power from the engine transmission shaft and motive power from the travel transmission shaft, combine the received motive power, and transmit the combined motive power to the travel device, in a plan view, the motor transmission shaft and the first input shaft being located on a first side of the engine transmission shaft in a left-right direction, and the generator transmission shaft and the second input shaft being located on a second side of the engine transmission shaft in the left-right direction, the first input shaft being located closer to the engine transmission shaft than the motor transmission shaft is, and the second input shaft being located closer to the engine transmission shaft than the generator transmission shaft is.

According to this aspect of the present invention, the motor and the generator are provided next to each other in the left-right direction, and the first planetary gear device and the second planetary gear device are provided next to each other in the left-right direction. With this configuration, if the size of the cores of the motor and the generator is increased, the motor and the generator move to the right and left away from the engine transmission shaft.

According to the above aspect of the present invention, even if the motor and the generator move to the right and left away from the engine transmission shaft, the first input shaft of the first planetary gear device is located closer to the engine transmission shaft than the motor transmission shaft of the motor is, and the second input shaft of the second planetary gear device is located closer to the engine transmission shaft than the generator transmission shaft of the generator is.

As a result, even if the size of the cores of the motor and the generator are increased and the motor and the generator move to the right and left away from the engine transmission shaft, the positions of the first planetary gear device and the second planetary gear device do not change relative to the engine transmission shaft, or the first planetary gear device and the second planetary gear device do not move very much to the right and left away from the engine transmission shaft, thereby suppressing an increase in the size of the case that houses the first planetary gear device and the second planetary gear device.

Also, when the output of the motor and the generator is increased, there is a reduced need to increase the size of the case that houses the first planetary gear device and the second planetary gear device, thereby suppressing an increase in the weight of the work vehicle. Suppressing an increase in the weight of the work vehicle makes it possible to improve the traveling performance of the work vehicle.

In another aspect of the present invention, it is preferable that in a plan view, the engine transmission shaft and the first input shaft are separated by a left-right distance that is larger than a left-right distance between the motor transmission shaft and the first input shaft, and in a plan view, the engine transmission shaft and the second input shaft are separated by a left-right distance that is larger than a left-right distance between the generator transmission shaft and the second input shaft.

The first planetary gear device has a predetermined outer diameter centered about the first input shaft, and the second planetary gear device has a predetermined outer diameter centered about the second input shaft.

According to the above aspect of the present invention, the first planetary gear device and the second planetary gear device are arranged so as not to be too close to the engine transmission shaft. This avoids the case where the first planetary gear device and the second planetary gear device interfere with the engine transmission shaft, while allowing the first input shaft of the first planetary gear device to be reasonably positioned closer to the engine transmission shaft than the motor transmission shaft of the motor is, and allowing the second input shaft of the second planetary gear device to be reasonably positioned closer to the engine transmission shaft than the generator transmission shaft of the generator is.

In another aspect of the present invention, it is preferable that the motor and the generator are each a motor generator.

According to this aspect of the present invention, the motor and the generator are each a motor generator, and therefore the motor can be operated as a generator, and the generator can be operated as a motor.

As a result, by operating the motor as a generator, the motor (generator) can generate power, and the generator can charge the battery.

By operating the generator as a motor, motive power from the engine, motive power from the motor, and motive power from the generator (motor) can be combined by the first planetary gear device (second planetary gear device) and transmitted to the travel device.

By operating the generator as a motor, motive power from the motor and motive power from the generator (motor) can be combined by the first planetary gear device (second planetary gear device) and transmitted to the travel device, without transmission of motive power from the engine to the first planetary gear device (second planetary gear device).

As described above, by using motor generators as the motor and the generator, it is possible to be compatible with various travel states, which is advantageous in terms of improving the traveling performance of the work vehicle.

In another aspect of the present invention, it is preferable that the work vehicle further includes: a motor gear mechanism configured to reduce a speed of motive power from the motor transmission shaft and transmit the speed-reduced motive power to the travel transmission shaft; and a generator gear mechanism configured to increase a speed of motive power from the engine transmission shaft and transmit the speed-increased motive power to the generator transmission shaft.

According to this aspect of the present invention, motive power from the motor is reduced in speed by the motor gear mechanism and transmitted to the first planetary gear device (second planetary gear device). By driving the motor to rotate at high speed, high-speed, low-torque power from the motor is converted into low-speed, high-torque power and transmitted to the first planetary gear device (second planetary gear device), and when this is combined with increasing the size of the motor core, it is possible to increase the output of the motor.

According to the above aspect of the present invention, motive power from the engine is increased in speed by the generator gear mechanism and transmitted to the generator, and the generator is driven to rotate at high speed. When this is combined with increasing the size of the generator core, it is possible to increase the output of the generator.

When this is combined with an increase in the size of the motor and the generator, it is possible to increase the output of the motor and the generator, which is advantageous in terms of improving the traveling performance of the work vehicle.

In another aspect of the present invention, it is preferable that the travel transmission shaft is cylindrical, and the engine transmission shaft is provided inside the travel transmission shaft.

According to this aspect of the present invention, the engine transmission shaft and the travel transmission shaft are provided at the same position, and the space used to provide the engine transmission shaft and the travel transmission shaft is kept small, and therefore motive power can be more easily transmitted from the engine output shaft and the travel transmission shaft to the first planetary gear device and the second planetary gear device.

This makes it possible to avoid the case where the first planetary gear device and the second planetary gear device interfere with the engine transmission shaft, while also being advantageous in that the first input shaft of the first planetary gear device can be positioned closer to the engine transmission shaft than the motor transmission shaft of the motor is, and also being advantageous in that the second input shaft of the second planetary gear device can be positioned closer to the engine transmission shaft than the generator transmission shaft of the generator is.

In another aspect of the present invention, it is preferable that the first input shaft is at a higher position than the motor transmission shaft, the second input shaft is at a higher position than the generator transmission shaft, and the engine transmission shaft is at a higher position than the first input shaft and the second input shaft.

According to this aspect of the present invention, the engine transmission shaft is located at a higher position than the motor transmission shaft of the motor and the generator transmission shaft of the generator, and therefore even if the size of the cores of the motor and the generator is increased, it is possible to place the motor and the generator close to each other while also avoiding interference with the engine transmission shaft. Similarly, the first planetary gear device and the second planetary gear device can be placed closer to each other while also avoiding interference with the engine transmission shaft.

This suppresses an increase in the size of the case that houses the motor and the generator, and suppresses an increase in the size of the case that houses the first planetary gear device and the second planetary gear device, which is advantageous in terms of suppressing an increase in weight of the work vehicle and also advantageous in terms of improving the traveling performance of the work vehicle.

According to the above aspect of the present invention, the first input shaft of the first planetary gear device is provided at a higher position than the motor transmission shaft of the motor, and the second input shaft of the second planetary mechanism is provided at a higher position than the generator transmission shaft of the generator, and therefore the first input shaft and the second input shaft of the first planetary gear device and the second planetary gear device are provided at positions close to the engine output shaft. This allows motive power to be more easily transmitted from the engine transmission shaft to the first planetary gear device and the second planetary gear device.

According to the above aspect of the present invention, the motor transmission shaft and the generator transmission shaft of the motor and the generator, and the first input shaft and the second input shaft of the first planetary gear device and the second planetary gear device are provided at lower positions than the engine output shaft.

Accordingly, the motor, the generator, the first planetary gear device, and the second planetary gear device are provided at lower positions, and the center of gravity of the work vehicle can be lowered, which is advantageous in terms of improving the traveling performance of the work vehicle.

In another aspect of the present invention, it is preferable that in a view in the front-rear direction, the motor transmission shaft and the generator transmission shaft are at symmetric positions with respect to an imaginary vertical line passing through the engine transmission shaft in a vertical direction, and the first input shaft and the second input shaft are at symmetric positions with respect to the imaginary vertical line.

According to this aspect of the present invention, the motor transmission shaft of the motor and the generator transmission shaft of the generator are arranged at symmetric positions, and the first input shaft of the first planetary gear device and the second input shaft of the second planetary gear device are arranged at symmetric positions, thereby achieving a balanced arrangement of the engine transmission shaft, the first planetary gear device, the second planetary gear device, the motor, and the generator, which is advantageous in terms of improving the traveling performance of the work vehicle.

### BRIEF DESCRIPTION OF THE DRAWINGS

FIG. 1 is a left side view of a tractor.
FIG. 2 is a schematic view showing the inside of a clutch housing, a gear case, a motor case, and a transmission case.
FIG. 3 is a front view showing the positional relationship between a motor, a generator, a first planetary gear device, and a second planetary gear device.

### DETAILED DESCRIPTION OF PREFERRED EMBODIMENTS

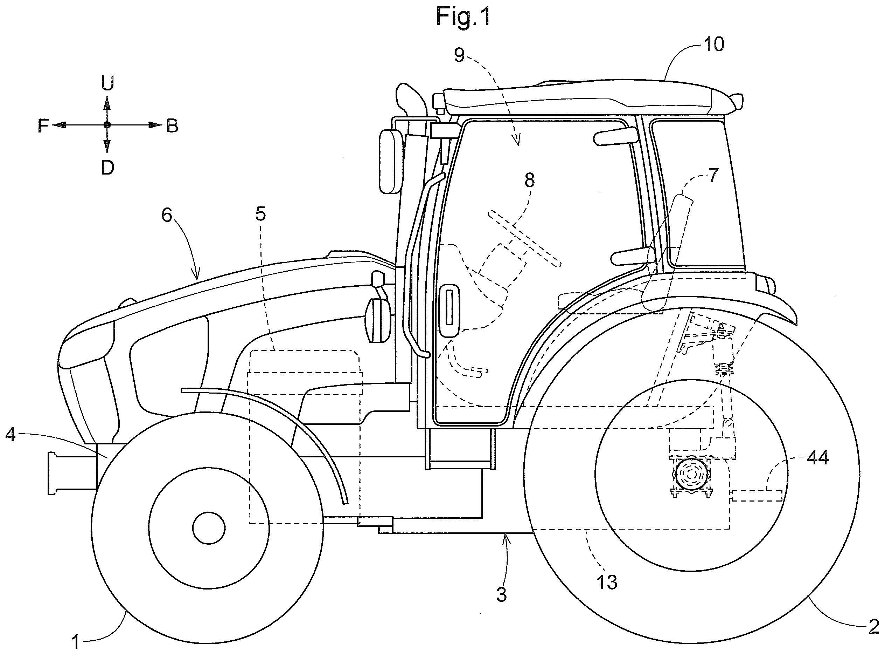

FIGS. 1 to 3 show a hybrid tractor, which is an example of a work vehicle. In FIGS. 1 to 3, F indicates the forward direction, B indicates the backward direction, U indicates the upward direction, D indicates the downward direction, R indicates the rightward direction, and L indicates the leftward direction.

### Overall configuration of tractor

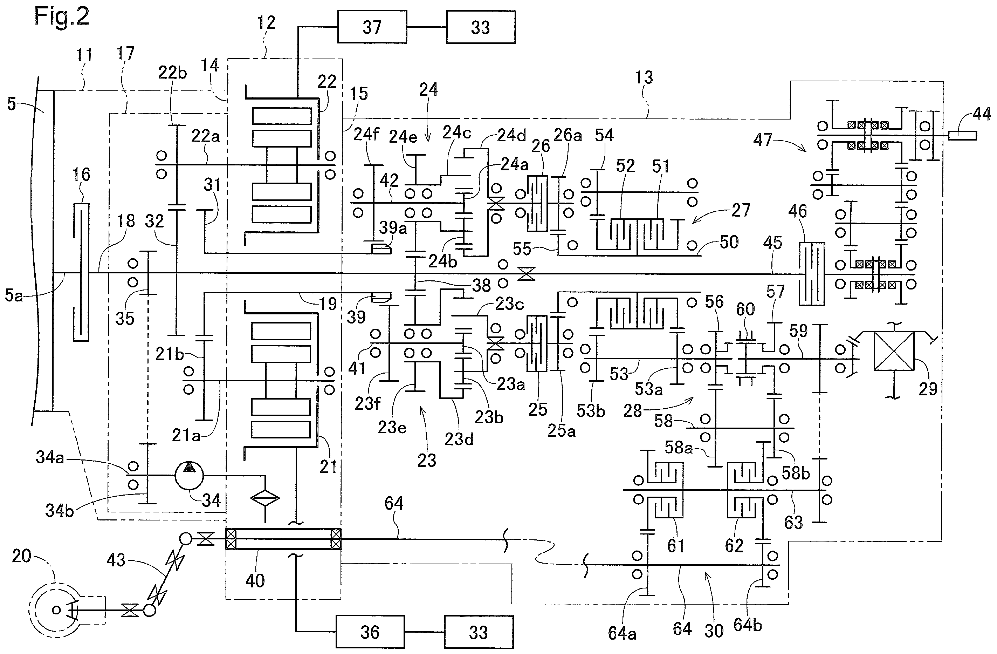

As shown in FIGS. 1 and 2, right and left front wheels 1 (corresponding to a travel device) are provided in a front portion of a body 3, right and left rear wheels 2 (also corresponding to a travel device) are provided in a rear portion of the body 3, and the body 3 is supported by the front wheels 1 and the rear wheels 2.

The body 3 includes, for example, an engine 5, a clutch housing 11 coupled to a rear portion of the engine 5, a motor case 12 coupled to a rear portion of the clutch housing 11, a transmission case 13 coupled to a rear portion of the motor case 12, and a front frame 4 coupled to a front portion of the engine 5. The front wheels 1 are mounted to the front frame 4, and the rear wheels 2 are mounted to a rear portion of the transmission case 13.

A bonnet 6 is provided in a front portion of the body 3, and the engine 5 is covered by the bonnet 6. A driver section 9 is provided in a rear portion of the body 3. The driver section 9 is covered by a cabin 10, and a driver seat 7 and a steering wheel 8 for steering the front wheels 1 are provided in the driver section 9.

### Overview of transmission system for front wheels 1 and rear wheels 2

As shown in FIG. 2, a first motor generator 21 (corresponding to a motor) and a second motor generator 22 (corresponding to a generator) are housed inside the motor case 12. Using motive power from the engine 5, the first motor generator 21 mainly outputs motive power, and the second motor generator 22 mainly generates electricity.

The first planetary gear device 23, the second planetary gear device 24, a first clutch 25, a second clutch 26, a forward/reverse switching device 27, an auxiliary transmission device 28, a rear wheel differential device 29, a front wheel transmission device 30, and the like are housed inside the transmission case 13.

Motive power from the engine 5 and motive power from the first motor generator 21 are transmitted to the first planetary gear device 23 and the second planetary gear device 24, and are combined in both the first planetary gear device 23 and the second planetary gear device 24. Low-speed combined power is output from the first planetary gear device 23, and high-speed combined power is output from the second planetary gear device 24.

When the first clutch 25 is set to a transmission state, low-speed combined power from the first planetary gear device 23 is transmitted to the forward/reverse switching device 27 via the first clutch 25. When the second clutch 26 is set to a transmission state, high-speed combined power from the second planetary gear device 24 is transmitted to the forward/reverse switching device 27 via the second clutch 26.

The low-speed combined power and the high-speed combined power are switched between a forward state and a reverse state by the forward/reverse switching device 27. Motive power from the forward/reverse switching device 27 is transmitted to the auxiliary transmission device 28, and then transmitted from the auxiliary transmission device 28 to the rear wheels 2 via the rear wheel differential device 29. Motive power branched off from a point between the auxiliary transmission device 28 and the rear wheel differential device 29 is transmitted to the front wheel transmission device 30 and then transmitted from the front wheel transmission device 30 to the front wheels 1 via a front wheel differential device 20.

### Internal configuration of clutch housing 11

As shown in FIG. 2, the rear portion of the clutch housing 11 and the front portion of the motor case 12 are connected to each other. A wall portion 14 separates the interior of the clutch housing 11 from the interior of the motor case 12. A front opening of the clutch housing 11 is closed by being connected to the engine 5. A wall portion 15 is connected to the rear portion of the motor case 12, and the interior of the motor case 12 is separated from the interior of the transmission case 13 by the wall portion 15.

A dry clutch 16 and a gear case 17 are housed inside the clutch housing 11, and the clutch 16 is connected to an output shaft 5a of the engine 5. A transmission shaft 18 (corresponding to an engine transmission shaft) is connected to the clutch 16, is arranged along the front-rear direction, and extends from the interior of the clutch housing 11, through the interior of the gear case 17 and the interior of the motor case 12, and into the interior of the transmission case 13. Motive power from the engine 5 is transmitted via the clutch 16 and the transmission shaft 18 to the first planetary gear device 23 and the second planetary gear device 24 as described later.

The gear case 17 is attached to a portion of the wall portion 14 on the side opposite to the interior of the motor case 12. The interior of the gear case 17 is separated from the area inside the clutch housing 11 in which the clutch 16 is provided, and is separated from the interior of the motor case 12 by the wall portion 14.

### Configuration of first motor generator 21 and second motor generator 22

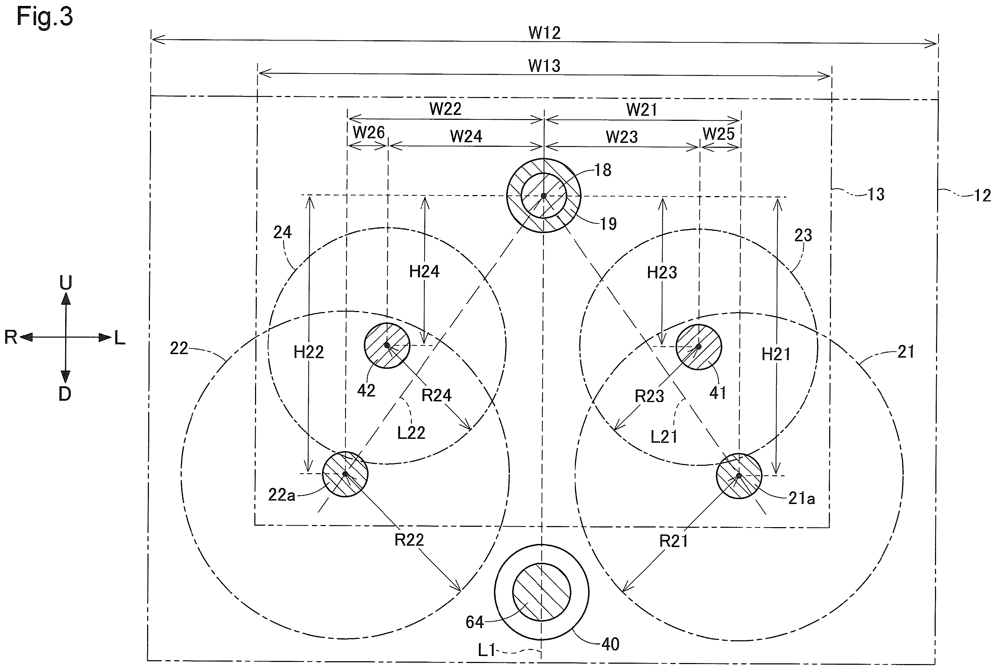

As shown in FIGS. 2 and 3, a cylindrical transmission shaft 19 (corresponding to a travel transmission shaft) is arranged along the front-rear direction and extends through the interior of the transmission case 13 and the interior of the gear case 17, and into the interior of the motor case 12. A transmission shaft 18 is provided inside the transmission shaft 19, and the transmission shafts 18 and 19 can rotate independently of each other.

The first motor generator 21 and the second motor generator 22 are arranged next to each other in the left-right direction and provided on the right side and the left side inside the motor case 12.

A transmission shaft 21a (corresponding to a motor transmission shaft) of the first motor generator 21 is arranged along the front-rear direction and extends forward into the interior of the gear case 17. A transmission shaft 22a (corresponding to a generator transmission shaft) of the second motor generator 22 is arranged along the front-rear direction and extends forward into the interior of the gear case 17.

### Configuration of motor gear mechanism

As shown in FIG. 2, inside the gear case 17, a transmission gear 31 (corresponding to a motor gear mechanism) is coupled to the transmission shaft 19. A transmission gear 21b (corresponding to a motor gear mechanism) is coupled to the transmission shaft 21a of the first motor generator 21. The transmission gear 31 and the transmission gear 21b of the first motor generator 21 are meshed with each other, and the transmission gear 31 has a larger diameter than the transmission gear 21b of the first motor generator 21.

Motive power from the first motor generator 21 (transmission shaft 21a) is reduced in speed via the transmission gear 21b of the first motor generator 21 and the transmission gear 31, and transmitted to the transmission shaft 19, and then transmitted to the first planetary gear device 23 and the second planetary gear device 24 as described later.

### Configuration of generator gear mechanism

As shown in FIG. 2, inside the gear case 17, a transmission gear 32 (corresponding to a generator gear mechanism) is coupled to the transmission shaft 18. A transmission gear 22b (corresponding to a generator gear mechanism) is coupled to the transmission shaft 22a of the second motor generator 22. The transmission gear 32 and the transmission gear 22b of the second motor generator 22 are meshed with each other, and the transmission gear 32 has a larger diameter than the transmission gear 22b of the second motor generator 22.

Motive power from the engine 5 is increased in speed and transmitted from the transmission shaft 18 via the transmission gear 32 and the transmission gear 22b of the second motor generator 22 to the second motor generator 22 (transmission shaft 22a), and the second motor generator 22 thus generates electricity.

### Configurations related to first motor generator 21 and second motor generator 22

As shown in FIG. 2, a first inverter 36 is provided for the first motor generator 21, a second inverter 37 is provided for the second motor generator 22, and a battery 33 is provided.

When the first motor generator 21 (second motor generator 22) operates as a motor to supply motive power to the transmission shaft 18 (transmission shaft 19), DC power from the battery 73 is converted to AC power by the first inverter 36 (second inverter 37) and supplied to the first motor generator 21 (second motor generator 22), and the first motor generator 21 (second motor generator 22) operates as a motor (drive mode).

When the first motor generator 21 (second motor generator 22) is driven to operate as a generator, AC power generated by the first motor generator 21 (second motor generator 22) is converted to DC power by the first inverter 36 (second inverter 37), and the battery 33 is charged (regeneration mode). Note that a capacitor (not shown) may be used as the battery 33.

Based on the state of a working device (not shown) attached to the body 3, the travel state of the body 3, and the like, a control device (not shown) sets the first motor generator 21 to the regeneration mode or the drive mode and sets the second motor generator 22 to the regeneration mode or the drive mode.

The basic travel state is a state in which the first motor generator 21 is set to the drive mode and the second motor generator 22 is set to the regeneration mode.

In the basic travel state, motive power from the engine 5 is transmitted to the first planetary gear device 23 and the second planetary gear device 24, and motive power from the first motor generator 21 is transmitted to the first planetary gear device 23 and the second planetary gear device 24, as described later.

By setting the clutch 16 to the disengaged state, it is also possible to stop the engine 5 and travel with the first motor generator 21 in the drive mode and the second motor generator 22 in the drive mode.

### Configuration of oil pump 34 for cooling first motor generator 21 and second motor generator 22

As shown in FIG. 2, lubricating oil having a relatively low viscosity is stored inside the motor case 12. An oil pump 34 is provided in a lower portion inside the gear case 17 so as to be located below the transmission shafts 18 and 19. The oil pump 34 has a drive shaft 34a arranged along the front-rear direction, and a transmission gear 34b is coupled to the drive shaft 34a of the oil pump 34.

The oil pump 34 is provided at a position lower than the transmission shaft 21a of the first motor generator 21 and the transmission shaft 22a of the second motor generator 22. In a plan view, the oil pump 34 is provided between the transmission shaft 21a of the first motor generator 21 and the transmission shaft 22a of the second motor generator 22.

The transmission gear 35 is coupled to the transmission shaft 18, and the transmission gear 35 and the transmission gear 34b of the oil pump 34 are meshed with each other. Motive power from the engine 5 is transmitted to the oil pump 34 via the transmission shaft 18 and the transmission gear 35, thereby driving the oil pump 34.

When the oil pump 34 is driven, the lubricating oil in the motor case 12 is supplied to the oil pump 34 through a filter (not shown), then supplied from the oil pump 34 through an oil cooler (not shown), and then supplied to the interior of the first motor generator 21 and the interior of the second motor generator 22. The first motor generator 21 and the second motor generator 22 are cooled by the supplied lubricating oil, and the lubricating oil returns from the first motor generator 21 and the second motor generator 22 to the motor case 12.

### Configuration of first planetary gear device 23

As shown in FIGS. 2 and 3, the first planetary gear device 23 and the second planetary gear device 24 are arranged next to each other in the left-right direction and provided on the right side and the left side in a front portion of the interior of the transmission case 13.

The first planetary gear device 23 includes, for example, an input shaft 41 (corresponding to a first input shaft), a sun gear 23a, a plurality of planetary gears 23b, a carrier 23c, a ring gear 23d, and transmission gears 23e and 23f.

The input shaft 41 is arranged along the front-rear direction and extends forward. The sun gear 23a and the transmission gear 23f are coupled to the input shaft 41. The planetary gears 23b are rotatably supported by the carrier 23c, the sun gear 23a is meshed with the planetary gears 23b, and the ring gear 23d is meshed with the planetary gears 23b.

The transmission gear 23e is coupled to the ring gear 23d. A transmission gear 38 is coupled to the transmission shaft 18, and the transmission gear 23e of the first planetary gear device 23 and the transmission gear 38 are meshed with each other. A transmission gear 39 is coupled to the transmission shaft 19, and the transmission gear 23f of the first planetary gear device 23 and the transmission gear 39 are meshed with each other.

Motive power from the engine 5 (or motive power from the second motor generator 22) is transmitted to the ring gear 23d of the first planetary gear device 23 via the transmission shaft 18 and the transmission gear 38. Motive power from the first motor generator 21 is transmitted to the input shaft 41 (sun gear 23a) of the first planetary gear device 23 via the transmission gear 31, the transmission shaft 19, and the transmission gear 39.

In the first planetary gear device 23, motive power from the engine 5 (or motive power from the second motor generator 22) and motive power from the first motor generator 21 are combined and changed in speed, and low-speed combined power is output from the carrier 23c of the first planetary gear device 23 to the first clutch 25.

### Configuration of second planetary gear device 24

As shown in FIGS. 2 and 3, the second planetary gear device 24 has, for example, an input shaft 42 (corresponding to a second input shaft), a sun gear 24a, a plurality of planetary gears 24b, a carrier 24c, a ring gear 24d, and transmission gears 24e and 24f.

The input shaft 42 is arranged along the front-rear direction and extends forward. The sun gear 24a and the transmission gear 24f are coupled to the input shaft 42. The transmission gear 24e is coupled to the carrier 24c. The planetary gears 24b are rotatably supported by the carrier 24c, the sun gear 24a is meshed with the planetary gears 24b, and the ring gear 24d is meshed with the planetary gears 24b. The transmission gear 24e of the second planetary gear device 24 and the transmission gear 38 are meshed with each other, and the transmission gear 24f of the second planetary gear device 24 and the transmission gear 39 are meshed with each other.

Motive power from the engine 5 (or motive power from the second motor generator 22) is transmitted to the carrier 24c of the second planetary gear device 24 via the transmission shaft 18 and the transmission gear 38. Motive power from the first motor generator 21 is transmitted to the input shaft 42 (sun gear 24a) of the second planetary gear device 24 via the transmission gear 31, the transmission shaft 19, and the transmission gear 39.

In the second planetary gear device 24, motive power from the engine 5 (or motive power from the second motor generator 22) and motive power from the first motor generator 21 are combined and changed in speed, and high-speed combined power is output from the ring gear 24d of the second planetary gear device 24 to the second clutch 26.

### Configuration of transmission system for PTO shaft 44

As shown in FIG. 2, inside the transmission case 13, a transmission shaft 45 is coupled to the transmission shaft 18, and a PTO clutch 46 is connected to the transmission shaft 45. A PTO transmission device 47 is provided, and a PTO shaft 44 is provided in a rear portion of the transmission case 13 (see FIG. 1).

Motive power from the engine 5 is transmitted to the PTO transmission device 47 via the clutch 16, the transmission shafts 18 and 45, and the PTO clutch 46, and then transmitted from the PTO transmission device 47 to the PTO shaft 44. When a work device (not shown) is coupled to a rear portion of the body 3, a transmission shaft (not shown) is connected to the PTO shaft 44 and the work device in order to transmit motive power from the PTO shaft 44 to the work device.

### Configuration of forward/reverse switching device 27

As shown in FIG. 2, the forward/reverse switching device 27 includes a cylindrical shaft 50, a forward clutch 51, a reverse clutch 52, a transmission shaft 53, an intermediate gear 54, and the like.

The cylindrical shaft 50 is rotatably attached to the transmission shaft 45, and the transmission gear 55 is coupled to the cylindrical shaft 50. The transmission gear 55 is meshed with a transmission gear 25a of the first clutch 25, and the transmission gear 55 is meshed with a transmission gear 26a of the second clutch 26.

The forward clutch 51 and the reverse clutch 52 are attached to the cylindrical shaft 50. Transmission gears 53a and 53b are coupled to the transmission shaft 53, and the output gear of the forward clutch 51 is meshed with the transmission gear 53a of the transmission shaft 53. The output gear of the reverse clutch 52 is meshed with the intermediate gear 54, and the intermediate gear 54 is meshed with the transmission gear 53b of the transmission shaft 53.

When the first clutch 25 is set to the transmission state, low-speed combined power from the first planetary gear device 23 is transmitted to the cylindrical shaft 50 via the first clutch 25. When the second clutch 26 is set to the transmission state, high-speed combined power from the second planetary gear device 24 is transmitted to the cylindrical shaft 50 via the second clutch 26.

When the forward clutch 51 is operated to the transmission state, motive power from the cylindrical shaft 50 is transmitted to the transmission shaft 53 in the forward state via the forward clutch 51. When the reverse clutch 52 is operated to the transmission state, motive power from the cylindrical shaft 50 is transmitted to the transmission shaft 53 in the reverse state via the reverse clutch 52 and the intermediate gear 54.

### Configuration of auxiliary transmission device 28

As shown in FIG. 2, the auxiliary transmission device 28 includes a high-speed gear 56, a low-speed gear 57, a transmission shaft 58, a rear wheel output shaft 59, a shift member 60, and the like.

The high-speed gear 56 is coupled to the transmission shaft 53, and a transmission gear 58a of the transmission shaft 58 is meshed with the high-speed gear 56. The rear wheel output shaft 59 is provided concentrically with the transmission shaft 53, and the shift member 60 is slidably attached to the rear wheel output shaft 59. The low-speed gear 57 is rotatably attached to the rear wheel output shaft 59, and a transmission gear 58b of the transmission shaft 58 is meshed with the low-speed gear 57.

When the shift member 60 is engaged with the high-speed gear 56, the transmission shaft 53 and the rear wheel output shaft 59 are coupled to each other, and motive power from the transmission shaft 53 is transmitted to the rear wheel output shaft 59 in a high speed state, and then from the rear wheel output shaft 59 to the rear wheels 2 via the rear wheel differential device 29.

When the shift member 60 is engaged with the low-speed gear 57, motive power from the transmission shaft 53 is transmitted to the rear wheel output shaft 59 in a low speed state via the high-speed gear 56, the transmission shaft 58, and the low-speed gear 57, and then from the rear wheel output shaft 59 to the rear wheels 2 via the rear wheel differential device 29.

### Configuration of front wheel transmission device 30

As shown in FIG. 2, the front wheel transmission device 30 includes a standard clutch 61, a speed increasing clutch 62, a transmission shaft 63, a front wheel output shaft 64, and the like.

The standard clutch 61 and the speed increasing clutch 62 are attached to the transmission shaft 63, and motive power from the rear wheel output shaft 59 is transmitted to the transmission shaft 63. The output gear of the standard clutch 61 is meshed with a transmission gear 64a of the front wheel output shaft 64, and the output gear of the speed increasing clutch 62 is meshed with a transmission gear 64b of the front wheel output shaft 64.

A cylindrical partition portion 40 extends between the wall portion 14 and the wall portion 15 inside the motor case 12. The front wheel output shaft 64 passes through the partition portion 40 from inside the transmission case 13 and projects forward, and the transmission shaft 43 extends between the front wheel differential device 20 and the front wheel output shaft 64.

Lubricating oil is stored in the transmission case 13, and the lubricating oil can travel back and forth between the transmission case 13 and the gear case 17 by passing through the partition portion 40. The lubricating oil for the motor case 12 is different from the lubricating oil for the transmission case 13 and the gear case 17.

The interior of the motor case 12 and the interior of the gear case 17 are separated by the wall portion 14, the interior of the motor case 12 and the interior of the transmission case 13 are separated by the wall portion 15, and the area inside the partition portion 40 is separated from the interior of the motor case 12, and therefore the lubricating oil in the motor case 12 does not mix with the lubricating oil in the transmission case 13 and the gear case 17.

When the front wheels 1 are steered within a set angle range to the right or left from the straight ahead position, the standard clutch 61 is set to the transmission state.

Motive power from the rear wheel output shaft 59 is transmitted to the front wheel output shaft 64 via the transmission shaft 63 and the standard clutch 61, and then transmitted to the front wheels 1 via the transmission shaft 43 and the front wheel differential device 20, and therefore the front wheels 1 and rear wheels 2 are driven at the same speed.

When the front wheels 1 are steered to the right or left beyond right and left set angles, the speed increasing clutch 62 is set to the transmission state.

Motive power from the rear wheel output shaft 59 is transmitted to the front wheel output shaft 64 via the transmission shaft 63 and the speed increasing clutch 62, and then transmitted to the front wheels 1 via the transmission shaft 43 and the front wheel differential device 20, and therefore the front wheels 1 are driven at a higher speed than the rear wheels 2.

### First positional relationship that first motor generator 21 and second motor generator 22 have with first planetary gear device 23 and second planetary gear device 24

As shown in FIG. 3, the transmission shafts 18 and 19 extend along the front-rear direction at upper portions of lateral central portions of the motor case 12 and the transmission case 13.

The front wheel output shaft 64 and the partition portion 40 extend along the front-rear direction below the lateral central portions of the motor case 12 and the transmission case 13. In a view in the front-rear direction, if an imaginary vertical line L1 is assumed to pass vertically through the centers of the transmission shafts 18 and 19, the centers of the front wheel output shaft 64 and the partition portion 40 are located on the imaginary vertical line L1.

The first motor generator 21 and the second motor generator 22 are provided next to each other in the left-right direction inside the motor case 12. The first planetary gear device 23 and the second planetary gear device 24 are provided next to each other in the left-right direction at a front portion inside the transmission case 13.

In a plan view (front view), the first motor generator 21 (transmission shaft 21a) and the first planetary gear device 23 (input shaft 41) are provided on the left side of the transmission shafts 18 and 19. The second motor generator 22 (transmission shaft 22a) and the second planetary gear device 24 (input shaft 42) are provided on the right side of the transmission shafts 18 and 19.

As a result, in a plan view, the transmission shafts 18 and 19, the front wheel output shaft 64, and the partition portion 40 are provided between the first motor generator 21 (transmission shaft 21a) and the second motor generator 22 (transmission shaft 22a), and between the first planetary gear device 23 (input shaft 41) and the second planetary gear device 24 (input shaft 42).

In a side view, the first motor generator 21 (transmission shaft 21a) and the first planetary gear device 23 (input shaft 41) are provided between the transmission shafts 18 and 19 and the front wheel output shaft 64 and partition portion 40. The second motor generator 22 (transmission shaft 22a) and the second planetary gear device 24 (input shaft 42) are provided between the transmission shafts 18 and 19 and the front wheel output shaft 64 and partition portion 40.

The first motor generator 21 (transmission shaft 21a) and the second motor generator 22 (transmission shaft 21a) are provided at a higher position than the front wheel output shaft 64 and the partition portion 40.

The first planetary gear device 23 (input shaft 41) is provided at a higher position than the first motor generator 21 (transmission shaft 21a).

The second planetary gear device 24 (input shaft 42) is provided at a higher position than the second motor generator 22 (transmission shaft 22a).

The transmission shafts 18 and 19 are provided at a higher position than the first planetary gear device 23 (input shaft 41) and the second planetary gear device 24 (input shaft 42).

### Second positional relationship that first motor generator 21 and second motor generator 22 have with first planetary gear device 23 and second planetary gear device 24

As shown in FIG. 3, when a distance W21, a distance W22, a distance W23, a distance W24, a distance W25, and a distance W26 are assumed in a plan view (front view), the following descriptions hold true.

The distance W21 is the distance between the transmission shaft 21a of the first motor generator 21 and the transmission shafts 18 and 19 in the left-right direction.

The distance W22 is the distance between the transmission shaft 22a of the second motor generator 22 and the transmission shafts 18 and 19 in the left-right direction.

The distance W23 is the distance between the input shaft 41 of the first planetary gear device 23 and the transmission shafts 18 and 19 in the left-right direction.

The distance W24 is the distance between the input shaft 42 of the second planetary gear device 24 and the transmission shafts 18 and 19 in the left-right direction.

The distance W25 is the distance between the transmission shaft 21a of the first motor generator 21 and the input shaft 41 of the first planetary gear device 23 in the left-right direction.

The distance W26 is the distance between the transmission shaft 22a of the second motor generator 22 and the input shaft 42 of the second planetary gear device 24 in the left-right direction.

The distance W23 is set to a value smaller than the distance W21. As a result, the input shaft 41 of the first planetary gear device 23 is provided at a position closer to the transmission shafts 18 and 19 than the transmission shaft 21a of the first motor generator 21 is.

The distance W24 is set to a value smaller than the distance W22. As a result, the input shaft 42 of the second planetary gear device 24 is provided at a position closer to the transmission shafts 18 and 19 than the transmission shaft 22a of the second motor generator 22 is.

The distance W21 and the distance W22 are set to the same value. The distance W23 and the distance W24 are set to the same value.

The distance W23 is set to a value larger than the distance W25. The distance W24 is set to a value larger than the distance W26. The distance W25 and the distance W26 are set to the same value.

### Third positional relationship that first motor generator 21 and second motor generator 22 have with first planetary gear device 23 and second planetary gear device 24

As shown in FIG. 3, in a front view, when a vertical distance H21, a vertical distance H22, a vertical distance H23, a vertical distance H24, a first imaginary line L21, and a second imaginary line L22 are assumed, the following descriptions hold true.

The vertical distance H21 is the distance between the transmission shaft 21a of the first motor generator 21 and the transmission shafts 18 and 19 in the up-down direction.

The vertical distance H22 is the distance between the transmission shaft 22a of the second motor generator 22 and the transmission shafts 18 and 19 in the up-down direction.

The vertical distance H23 is the distance between the input shaft 41 of the first planetary gear device 23 and the transmission shafts 18 and 19 in the up-down direction.

The vertical distance H24 is the distance between the input shaft 42 of the second planetary gear device 24 and the transmission shafts 18 and 19 in the up-down direction.

The first imaginary line L21 is an imaginary straight line that passes through the centers of the transmission shafts 18 and 19 and the center of the transmission shaft 21a of the first motor generator 21.

The second imaginary line L22 is an imaginary straight line that passes through the centers of the transmission shafts 18 and 19 and the center of the transmission shaft 22a of the second motor generator 22.

The vertical distance H23 is set to a value smaller than the vertical distance H21. The center of the input shaft 41 of the first planetary gear device 23 is located above (to the left of) the first imaginary line L21.

The vertical distance H24 is set to a value smaller than the vertical distance H22. The center of the input shaft 42 of the second planetary gear device 24 is located above (to the right of) the second imaginary line L22.

The vertical distance H21 and the vertical distance H22 are set to the same value. The vertical distance H23 and the vertical distance H24 are set to the same value.

### Fourth positional relationship that first motor generator 21 and second motor generator 22 have with first planetary gear device 23 and second planetary gear device 24

As shown in FIG. 3, the transmission shaft 21a of the first motor generator 21 and the transmission shaft 22a of the second motor generator 22 are provided at symmetric positions with respect to the imaginary vertical line L1 in a front view (when viewed in the front-rear direction). In a front view (when viewed in the front-rear direction), the input shaft 41 of the first planetary gear device 23 and the input shaft 42 of the second planetary gear device 24 are provided at symmetric positions with respect to the imaginary vertical line L1.

An outer diameter R21 of the first motor generator 21 is greater than an outer diameter R23 of the first planetary gear device 23. An outer diameter R22 of the second motor generator 22 is greater than an outer diameter R24 of the second planetary gear device 24. The outer diameter R21 and the outer diameter R22 are set to the same value. The outer diameter R23 and the outer diameter R24 are set to the same value.

The motor case 12 that houses the first motor generator 21 and the second motor generator 22 has a large width W12. In this case, a width W13 of a front portion of the transmission case 13 (the portion in which the first planetary gear device 23 and the second planetary gear device 24 are housed) is smaller than the width W12.

### Configuration of transmission gear 39 of transmission shaft 19

As shown in FIG. 2, the motor case 12 and the transmission case 13 are manufactured in a state where they are separate from each other. The first motor generator 21 and the second motor generator 22 are housed in the motor case 12, the first planetary gear device 23 and the second planetary gear device 24 are housed in the transmission case 13, and then the motor case 12 and the transmission case 13 are coupled to each other.

In this case, the transmission gear 39 is configured to have a relatively long length in the front-rear direction, and a chamfer 39a is formed at the rear end portion of the transmission gear 39.

The input shaft 42 of the second planetary gear device 24 is configured to be slightly longer than the input shaft 41 of the first planetary gear device 23, and the transmission gear 24f of the second planetary gear device 24 is positioned slightly forward of the transmission gear 23f of the first planetary gear device 23.

When the motor case 12 and the transmission case 13 are coupled to each other in the above-described state, as the motor case 12 and the transmission case 13 approach each other, the transmission gear 39 and the transmission gear 24f of the second planetary gear device 24 come into contact with each other, and the chamfer 39a of the transmission gear 39 makes it possible for the transmission gear 39 to smoothly start to mesh with the transmission gear 24f of the second planetary gear device 24.

As the meshing of the transmission gear 39 with the transmission gear 24f of the second planetary gear device 24 progresses, the transmission gear 39 then comes into contact with the transmission gear 23f of the first planetary gear device 23, and the chamfer 39a of the transmission gear 39 makes it possible for the transmission gear 39 to smoothly start to mesh with the transmission gear 23f of the first planetary gear device 23.

As described above, the transmission gear 39 becomes meshed with the transmission gears 23f and 24f of the first planetary gear device 23 and the second planetary gear device 24, and the motor case 12 and the transmission case 13 come into contact with each other, and thus the motor case 12 and the transmission case 13 are coupled to each other.

### First Alternative Embodiment of Invention

In a plan view (front view), the first motor generator 21 (transmission shaft 21a) and the first planetary gear device 23 (input shaft 41) may be provided on the right side of the transmission shafts 18 and 19, and the second motor generator 22 (transmission shaft 22a) and the second planetary gear device 24 (input shaft 42) may be provided on the left side of the transmission shafts 18 and 19.

### Second Alternative Embodiment of Invention

A configuration is possible in which high-speed combined power is output from the first planetary gear device 23, and low-speed combined power is output from the second planetary gear device 24.

### Third Alternative Embodiment of Invention

The center of the input shaft 41 of the first planetary gear device 23 may be located on the first imaginary line L21, and the center of the input shaft 42 of the second planetary gear device 24 may be located on the second imaginary line L22.

With this configuration as well, the transmission shaft 21a of the first motor generator 21 and the transmission shaft 22a of the second motor generator 22 are arranged at symmetric positions with respect to the imaginary vertical line L1, and the input shaft 41 of the first planetary gear device 23 and the input shaft 42 of the second planetary gear device 24 are arranged at symmetric positions with respect to the imaginary vertical line L1.

### Fourth Alternative Embodiment of Invention

In the configuration shown in FIG. 3, with the configurations described in (4-1) to (4-8) below, the transmission shaft 21a of the first motor generator 21 and the transmission shaft 22a of the second motor generator 22 may be provided at asymmetric positions with respect to the imaginary vertical line L1.
(4-1) The vertical distance H21 is set to a value larger than the vertical distance H22.
(4-2) The vertical distance H22 is set to a value larger than the vertical distance H21.
(4-3) The distance W21 is set to a value larger than the distance W22.
(4-4) The distance W22 is set to a value larger than the distance W21.
(4-5) Both the configuration of (4-1) and the configuration of (4-3) described above are provided.
(4-6) Both the configuration of (4-1) and the configuration of (4-4) described above are provided.
(4-7) Both the configuration of (4-2) and the configuration of (4-3) described above are provided.
(4-8) Both the configuration of (4-2) and the configuration of (4-4) described above are provided.

### Fifth Alternative Embodiment of Invention

In the configuration shown in FIG. 3, with the configurations described in (5-1) to (5-8) below, the input shaft 41 of the first planetary gear device 23 and the input shaft 42 of the second planetary gear device 24 may be provided at asymmetric positions with respect to the imaginary vertical line L1.
(5-1) The vertical distance H24 is set to a value larger than the vertical distance H23. In this case, the center of the input shaft 42 of the second planetary gear device 24 may be located on the second imaginary line L22, or may be located below (to the left of) the second imaginary line L22.
(5-2) The vertical distance H23 is set to a value larger than the vertical distance H24. In this case, the center of the input shaft 41 of the first planetary gear device 23 may be located on the first imaginary line L21, or may be located below (to the right of) the first imaginary line L21.
(5-3) The distance W24 is set to a value smaller than the distance W23. In this case, the center of the input shaft 42 of the second planetary gear device 24 may be located on the second imaginary line L22, or may be located below (to the left of) the second imaginary line L22.
(5-4) The distance W23 is set to a value smaller than the distance W24. In this case, the center of the input shaft 41 of the first planetary gear device 23 may be located on the first imaginary line L21, or may be located below (to the right of) the first imaginary line L21.
(5-5) Both the configuration of (5-1) and the configuration of (5-3) described above are provided.
(5-6) Both the configuration of (5-1) and the configuration of (5-4) described above are provided.
(5-7) Both the configuration of (5-2) and the configuration of (5-3) described above are provided.
(5-8) Both the configuration of (5-2) and the configuration of (5-4) described above are provided.

### Sixth Alternative Embodiment of Invention

The input shaft 41 of the first planetary gear device 23 may be provided at a lower position than the transmission shaft 21a of the first motor generator 21.

The input shaft 42 of the second planetary gear device 24 may be provided at a lower position than the transmission shaft 22a of the second motor generator 22.

### Seventh Alternative Embodiment of Invention

The configuration described in Fourth Alternative Embodiment of Invention or the configuration described in Fifth Alternative Embodiment of Invention may be adopted in the configuration described in Sixth Alternative Embodiment of Invention.

### Correspondence with claims: 1

A work vehicle includes a travel device (front wheels 1, rear wheels 2), an engine 5, and a battery 33.

The work vehicle further includes an engine transmission shaft (transmission shaft 18) that extends along the front-rear direction and is configured to receive motive power from the engine 5, and a travel transmission shaft (transmission shaft 19) extending along the front-rear direction.

The work vehicle further includes a motor (first motor generator 21) that includes a motor transmission shaft (transmission shaft 21a) extending along the front-rear direction, and that is configured to transmit motive power from the motor transmission shaft (transmission shaft 21a) to the travel transmission shaft (transmission shaft 19).

The work vehicle further includes a generator (second motor generator 22) including a generator transmission shaft (transmission shaft 22a) extending along the front-rear direction, the generator transmission shaft (transmission shaft 22a) being configured to receive motive power from the engine transmission shaft (transmission shaft 18).

The work vehicle further includes a first planetary gear device 23 that includes a first input shaft (input shaft 41) extending along the front-rear direction, and that is configured to receive motive power from the engine transmission shaft (transmission shaft 18) and motive power from the travel transmission shaft (transmission shaft 19), combine the received motive power, and transmit the combined motive power to the travel device (front wheels 1, rear wheels 2).

The work vehicle further includes a second planetary gear device 24 that includes a second input shaft (input shaft 42) extending along the front-rear direction, and that is configured to receive motive power from the engine transmission shaft (transmission shaft 18) and motive power from the travel transmission shaft (transmission shaft 19), combine the received motive power, and transmit the combined motive power to the travel device (front wheels 1, rear wheels 2).

In a plan view, the motor transmission shaft (transmission shaft 21a) and the first input shaft (input shaft 41) are located on a first side of the engine transmission shaft (transmission shaft 18) in a left-right direction, and the generator transmission shaft (transmission shaft 22a) and the second input shaft (input shaft 42) are provided on a second side of the engine transmission shaft (transmission shaft 18) in the left-right direction.

The first input shaft (input shaft 41) is located closer to the engine transmission shaft (transmission shaft 18) than the motor transmission shaft (transmission shaft 21a) is.

The second input shaft (input shaft 42) is located closer to the engine transmission shaft (transmission shaft 18) than the generator transmission shaft (transmission shaft 22a) is.

### Correspondence with claims: 2

In a plan view, the engine transmission shaft (transmission shaft 18) and the first input shaft (input shaft 41) are separated by a left-right distance W23 that is larger than a left-right distance W25 between the motor transmission shaft (transmission shaft 21a) and the first input shaft (input shaft 41).

In a plan view, the engine transmission shaft (transmission shaft 18) and the second input shaft (input shaft 42) are separated by a left-right distance W24 that is larger than a left-right distance W26 between the generator transmission shaft (transmission shaft 22a) and the second input shaft (input shaft 42).

### Correspondence with claims: 3

The motor (first motor generator 21) and the generator (second motor generator 22) are each a motor generator.

The work vehicle further includes a motor gear mechanism (transmission gears 21b, 31) configured to reduce a speed of motive power from the motor transmission shaft (transmission shaft 21a) and transmit the speed-reduced motive power to the travel transmission shaft (transmission shaft 19).

The work vehicle further includes a generator gear mechanism (transmission gears 22b, 32) configured to increase a speed of motive power from the engine transmission shaft (transmission shaft 18) and transmit the speed-increased motive power to the generator transmission shaft (transmission shaft 22a).

The travel transmission shaft (transmission shaft 19) is cylindrical. The engine transmission shaft (transmission shaft 18) is provided inside the travel transmission shaft (transmission shaft 19).

### Correspondence with claims: 4

The first input shaft (input shaft 41) is at a higher position than the motor transmission shaft (transmission shaft 21a).

The second input shaft (input shaft 42) is at a higher position than the generator transmission shaft (transmission shaft 22a).

The engine transmission shaft (transmission shaft 18) is at a higher position than the first input shaft (input shaft 41) and the second input shaft (input shaft 42).

### Correspondence with claims: 5

In a view in the front-rear direction, the motor transmission shaft (transmission shaft 21a) and the generator transmission shaft (transmission shaft 22a) are arranged at symmetric positions with respect to an imaginary vertical line L1 passing through the engine transmission shaft (transmission shaft 18) in a vertical direction, and the first input shaft (input shaft 41) and the second input shaft (input shaft 42) are arranged at symmetric positions with respect to the imaginary vertical line L1.

### INDUSTRIAL APPLICABILITY

The present invention is applicable not only to tractors, but also to work vehicles that carry and transport cargo, work vehicles that tow carts or the like, and construction work vehicles such as wheel loaders, and is also applicable to work vehicles equipped with a crawler-type travel device instead of the front wheels 1 and rear wheels 2.

### DESCRIPTION OF REFERENCE SIGNS

- 1: Front wheel (travel device)
- 2: Rear wheel (travel device)
- 5: Engine
- 18: Transmission shaft (engine transmission shaft)
- 19: Transmission shaft (travel transmission shaft)
- 21: First motor generator (motor) (motor generator)
- 21a: Transmission shaft (motor transmission shaft)
- 21b: Transmission gear (motor gear mechanism)
- 22: Second motor generator (generator) (motor generator)
- 22a: Transmission shaft (generator transmission shaft)
- 22b: Transmission gear (generator gear mechanism)
- 23: First planetary gear device
- 24: Second planetary gear device
- 31: Transmission gear (motor gear mechanism)
- 32: Transmission gear (generator gear mechanism)
- 33: Battery
- 41: Input shaft (first input shaft)
- 42: Input shaft (second input shaft)
- L1: Imaginary vertical line
- W23: Distance
- W24: Distance
- W25: Distance
- W26: Distance

## Claims

1. A work vehicle comprising:
a travel device (1,2);
an engine (5);
a battery (33);
an engine transmission shaft (18) extending in a front-rear direction and configured to receive motive power from the engine;
a travel transmission shaft (19) extending in the front-rear direction;
a motor (21) including a motor transmission shaft (21a) extending in the front-rear direction, the motor being configured to transmit motive power from the motor transmission shaft to the travel transmission shaft;
a generator (22) including a generator transmission shaft (22a) extending in the front-rear direction, the generator transmission shaft being configured to receive motive power from the engine transmission shaft;
a first planetary gear device (23) including a first input shaft (41) extending in the front-rear direction, the first planetary gear device being configured to receive motive power from the engine transmission shaft (18) and motive power from the travel transmission shaft (19), combine the received motive power, and transmit the combined motive power to the travel device; and
a second planetary gear device (24) including a second input shaft (42) extending in the front-rear direction, the second planetary gear device being configured to receive motive power from the engine transmission shaft (18) and motive power from the travel transmission shaft (19), combine the received motive power, and transmit the combined motive power to the travel device,
in a plan view, the motor transmission shaft (21a) and the first input shaft (41) being located on a first side of the engine transmission shaft in a left-right direction, and the generator transmission shaft (22a) and the second input shaft (42) being located on a second side of the engine transmission shaft in the left-right direction,
the first input shaft (41) being located closer to the engine transmission shaft than the motor transmission shaft is, and
the second input shaft (42) being located closer to the engine transmission shaft than the generator transmission shaft is.

2. The work vehicle according to claim 1,
wherein in a plan view, the engine transmission shaft (18) and the first input shaft (41) are separated by a left-right distance that is larger than a left-right distance between the motor transmission shaft (21a) and the first input shaft (41), and
in a plan view, the engine transmission shaft (18) and the second input shaft (42) are separated by a left-right distance that is larger than a left-right distance between the generator transmission shaft (22a) and the second input shaft (42).

3. The work vehicle according to claim 1 or 2,
wherein the motor (21) and the generator (22) are each a motor generator.

4. The work vehicle according to any one of claims 1 to 3, further comprising:
a motor gear mechanism (21b,31) configured to reduce a speed of motive power from the motor transmission shaft (21a) and transmit the speed-reduced motive power to the travel transmission shaft (19); and
a generator gear mechanism (22b,32) configured to increase a speed of motive power from the engine transmission shaft (18) and transmit the speed-increased motive power to the generator transmission shaft (22a).

5. The work vehicle according to any one of claims 1 to 4,
wherein the travel transmission shaft (19) is cylindrical, and
the engine transmission shaft (18) is provided inside the travel transmission shaft.

6. The work vehicle according to any one of claims 1 to 5,
wherein the first input shaft (41) is at a higher position than the motor transmission shaft (21a),
the second input shaft (42) is at a higher position than the generator transmission shaft (22a), and
the engine transmission shaft (18) is at a higher position than the first input shaft (41) and the second input shaft (42).

7. The work vehicle according to any one of claims 1 to 6,
wherein in a view in the front-rear direction, the motor transmission shaft (21a) and the generator transmission shaft (22a) are at symmetric positions with respect to an imaginary vertical line (L1) passing through the engine transmission shaft (18) in a vertical direction, and the first input shaft (41) and the second input shaft (42) are at symmetric positions with respect to the imaginary vertical line.
